(19) Europäisches Patentamt / European Patent Office / Office européen des brevets

(11) **EP 4 471 648 B1**

(12) **FASCICULE DE BREVET EUROPEEN**

(45) Date de publication et mention
de la délivrance du brevet:
**18.02.2026 Bulletin 2026/08**

(21) Numéro de dépôt: **24178317.4**

(22) Date de dépôt: **27.05.2024**

(51) Classification Internationale des Brevets (IPC):
**B64F 5/60** *(2017.01)*     **G06F 30/15** *(2020.01)*
**G06F 30/20** *(2020.01)*     **G06F 111/10** *(2020.01)*
**G06F 113/28** *(2020.01)*

(52) Classification Coopérative des Brevets (CPC):
**G06F 30/15; B64F 5/60; G06F 30/20;** B64F 5/10;
G06F 2111/10; G06F 2113/28

(54) **PROCÉDÉ DE MISE EN PLACE DE POSITIONNEURS DESTINÉS À SOUTENIR LE FUSELAGE ET LA VOILURE D'UN AÉRONEF PENDANT DES OPÉRATIONS D'ASSEMBLAGE DE L'AÉRONEF, COMPORTANT UNE PHASE DE SIMULATION**

VERFAHREN ZUM EINBAU VON STELLUNGSREGLERN, UM DEN RUMPF UND DIE TRAGFLÄCHE EINES FLUGZEUGS WÄHREND DER FLUGZEUGMONTAGE ZU STÜTZEN, WELCHES EINE SIMULATIONSPHASE UMFASST.

METHOD FOR INSTALLING POSITIONERS INTENDED TO SUPPORT THE FUSELAGE AND WING OF AN AIRCRAFT DURING AIRCRAFT ASSEMBLY OPERATIONS, COMPRISING A SIMULATION PHASE

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **30.05.2023 FR 2305324**

(43) Date de publication de la demande:
**04.12.2024 Bulletin 2024/49**

(73) Titulaire: **Airbus Operations (S.A.S.)**
**31060 Toulouse Cedex 9 (FR)**

(72) Inventeur: **DATAS, Jean-Marc**
**31060 TOULOUSE (FR)**

(74) Mandataire: **Cabinet Le Guen Maillet**
**3, impasse de la Vigie**
**CS 71840**
**35418 Saint-Malo Cedex (FR)**

(56) Documents cités:
**CN-A- 113 219 894    US-A1- 2018 314 787**

- **CHU WENMIN ET AL: "Self-calibration method of NC positioner for posture adjustment", THE INTERNATIONAL JOURNAL OF ADVANCED MANUFACTURING TECHNOLOGY, SPRINGER, LONDON, vol. 119, no. 11-12, 27 January 2022 (2022-01-27), pages 7669 - 7683, XP037778468, ISSN: 0268-3768, [retrieved on 20220127], DOI: 10.1007/S00170-021-08514-0**
- **GAI YU-CHUN ET AL: "Stiffness parameter configuration of cartesian positioner components", JOURNAL OF ZHEJIANG UNIVERSITY (ENGINEERING SCIENCE), GAIKAN BIANJIBU, HANGZHOU, CN, vol. 48, no. 8, 1 January 2014 (2014-01-01), pages 1434 - 1441, XP009550412, ISSN: 1008-973X, DOI: 10.3785/ J.ISSN.1008-973X.2014.08.013**
- **QIANG FANG ET AL: "Control system designing for correcting wing-fuselage assembly deformation of a large aircraft", ASSEMBLY AUTOMATION, EMERALD GROUP PUBLISHING LTD, GB, vol. 37, no. 1, 1 January 2017 (2017-01-01), pages 22 - 33, XP009194152, ISSN: 0144-5154, DOI: 10.1108/AA-01-2016-006**

**Description**

DOMAINE TECHNIQUE

La présente invention concerne une simulation d'efforts appliqués à des positionneurs destinés à soutenir le fuselage et la voilure d'un aéronef pendant des opérations d'assemblage de l'aéronef. La présente invention concerne notamment l'utilisation d'une telle simulation dans le cadre d'une mise en place de tels positionneurs.

ETAT DE LA TECHNIQUE ANTERIEURE

Avant de pouvoir être mis en service, un aéronef est construit sur une ligne d'assemblage. Pendant différentes phases d'assemblage, le fuselage et la voilure de l'aéronef 100 reposent sur des positionneurs afin de soutenir le fuselage et la voilure pendant des opérations d'assemblage de l'aéronef.

De manière à assurer l'adéquation des positionneurs par rapport aux charges de fuselage et de voilure, des simulations numériques sont réalisées à partir de modèles en éléments finis des positionneurs. Bien que permettant d'obtenir une grande précision de modélisation des interactions du fuselage et de la voilure avec les positionneurs, une telle approche de simulations numériques requiert de très nombreux calculs et analyses complexes, qui peuvent s'étaler sur des cycles de simulation de plusieurs jours.

Un nouveau cycle de simulation est d'ailleurs nécessaire lorsqu'une modification du placement des positionneurs ou une évolution du plan de charge de l'aéronef en phase d'assemblage doit être évaluée. A noter en outre que la grande précision de ces simulations réalisées à partir de modèles en éléments finis des positionneurs peut être remise en cause par des défauts de planéité et/ou d'homogénéité du sol de la ligne d'assemblage.

Il est alors souhaitable de fournir une solution qui permette de pallier ces inconvénients. Il est notamment souhaitable de fournir une solution qui permette de réduire le temps des simulations numériques permettant d'assurer l'adéquation des positionneurs par rapport aux charges de fuselage et de voilure lors de phases d'assemblage d'un aéronef. Il est en outre souhaitable de fournir une solution qui permette de prendre en compte, de manière efficace, des défauts de planéité et/ou d'homogénéité du sol de la ligne d'assemblage.

CHU WENMIN ET AL: "Self-calibration method of NC positioner for posture adjustment", THE INTERNATIONAL JOURNAL OF ADVANCED MANUFACTURING TECHNOLOGY, SPRINGER, LONDON, vol. 119, no. 11-12, 27 janvier 2022 (2022-01-27), pages 7669-7683, XP037778468, divulgue un procédé de calibration de positionneurs.

GAI YU-CHUN ET AL: "Stiffness parameter configuration of cartesian positioner components", JOURNAL OF ZHEJIANG UNIVERSITY (ENGINEERING SCIENCE), GAIKAN BIANJIBU, HANGZHOU, CN, vol. 48, no. 8, 1 janvier 2014 (2014-01-01), pages 1434-1441, XP009550412, divulgue un procédé de configuration de la raideur des positionneurs.

CN 113 219 894 A (CHENGDU AIRCRAFT IND GROUP CO LTD) 6 août 2021, divulgue un procédé de monitoring en temps réel de l'état d'outillage aéronautique sur base de capteurs de force tridimensionnels.

QIANG FANG ET AL: "Control system designing for correcting wing-fuselage assembly deformation of a large aircraft", ASSEMBLY AUTOMATION, EMERALD GROUP PUBLISHING LTD, GB, vol. 37, no. 1, 1 janvier 2017 (2017-01-01), pages 22-33, XP009194152, divulgue un procédé de contrôle hybride force/position de positionneurs.

US 2018/314787 A1 (TASIC MILAN [FR]) 1 novembre 2018, divulgue un procédé d'étalonnage de la rigidité des structures de support d'un ensemble comportant une structure principale et lesdites structures de support.

EXPOSE DE L'INVENTION

L'invention est exposée dans le jeu de revendications joint.

BREVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :

[Fig. 1] illustre schématiquement, en vue de dessus, un aéronef ;
[Fig. 2] illustre schématiquement, en perspective, un positionneur ;
[Fig. 3] illustre schématiquement, en perspective, un agencement de bloc d'interface du positionneur ;
[Fig. 4A] illustre schématiquement un ensemble de trois ressorts équivalents qui modélisent le positionneur dans le cadre de simulations numériques ;
[Fig. 4B] illustre schématiquement une matrice de rigidité qui regroupe des valeurs propres associée aux ressorts équivalents ;
[Fig. 5] illustre schématiquement un exemple de plateforme matérielle permettant d'implémenter, sous forme de circuiterie électronique, un système informatique adapté pour réaliser des simulations numériques telles que décrites ici ; et
[Fig. 6] illustre schématiquement un procédé de mise en place de positionneurs.

EXPOSE DETAILLE DE MODES DE REALISATION

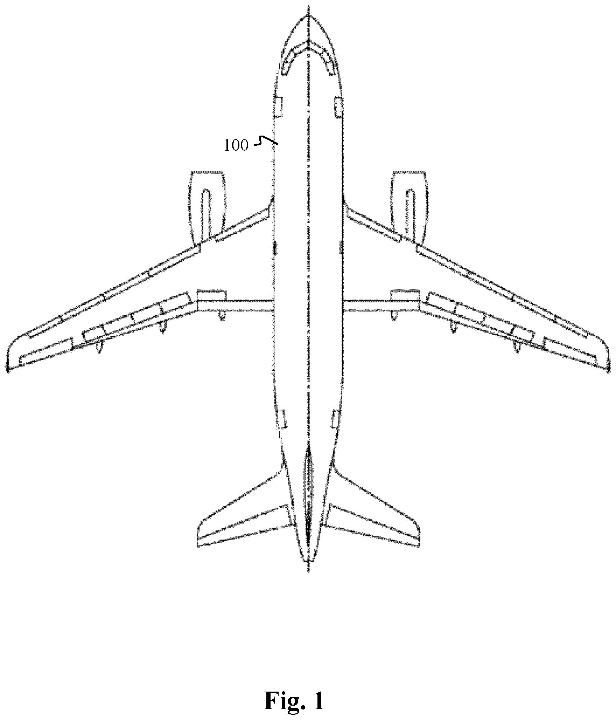

La Fig. 1 illustre, en vue de dessus, un aéronef 100. Avant de pouvoir être mis en service, l'aéronef 100 est construit sur une ligne d'assemblage. Pendant différentes phases d'assemblage, le fuselage et la voilure de l'aéronef 100 reposent sur des positionneurs. Un aéronef étant substantiellement symétrique, les positionneurs 200 sont utilisés par paires, placés de part et d'autre d'un plan de (substantielle) symétrie de l'aéronef 100.

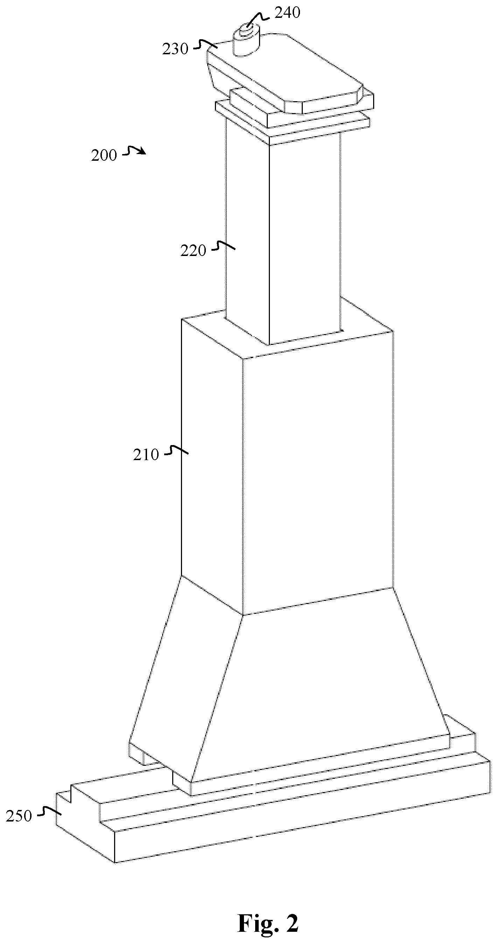

Un tel positionneur 200 est schématiquement illustré, en perspective, sur la Fig. 2. Le positionneur 200 comporte une base 210 montée mobile en translation horizontale sur un système de guidage au sol, typiquement un système de rails 250. Le positionneur 200 comporte aussi un mât 220, typiquement télescopique, monté mobile en translation verticale par rapport à la base 210. Ces deux mouvements en translation permettent de placer grossièrement le positionneur 200 par rapport à l'aéronef en phase d'assemblage. Le positionneur 200 comporte aussi une table croisée 230 à l'extrémité supérieure du mât 220, permettant d'affiner le placement du positionneur 200 par rapport à l'aéronef en phase d'assemblage. Le positionneur 200 comporte aussi, monté sur la table croisée 230, un bloc d'interface 240 adapté pour assurer la mise en place du fuselage ou de la voilure sur le positionneur 200.

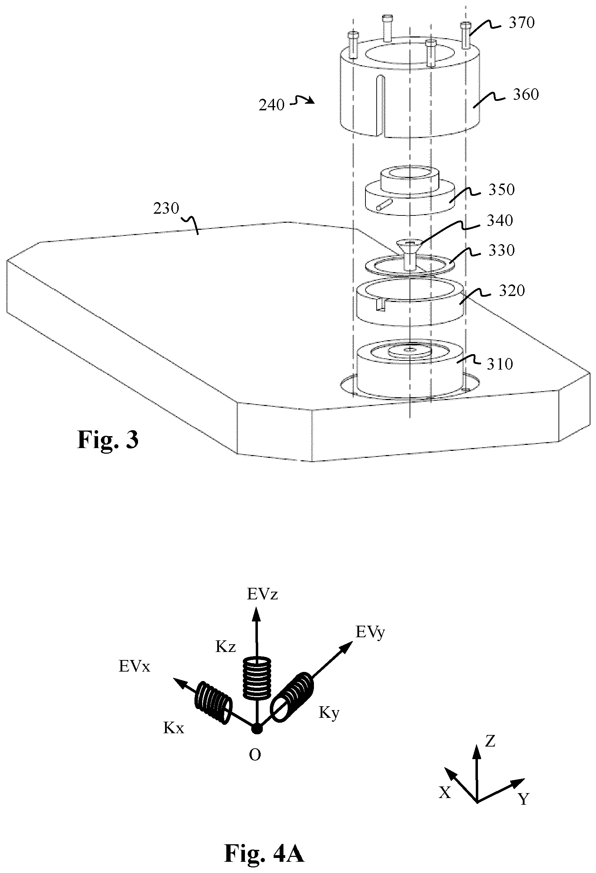

Tel que schématiquement illustré sur la Fig. 3, le bloc d'interface 240 comporte un boîtier 360 dans lequel est placé un capteur d'efforts 310 adapté pour mesurer des efforts, particulièrement des efforts verticaux subis par le positionneur 200. Préférentiellement, le bloc d'interface 240 comporte en outre un capteur inductif 350 adapté pour détecter une présence de charge sur le positionneur 200. Comme détaillé ci-après, le bloc d'interface 240 peut comporter un adaptateur de rigidité 330 qui est calibré suite à des simulations et à des essais en charge.

De manière illustrative, la Fig. 3 montre un assemblage du bloc d'interface 240 dans lequel le capteur d'efforts 310 est placé dans un logement de la table croisée 230. Une entretoise de calage 320 adaptée pour caler le capteur d'efforts 310 et le capteur inductif 350, de manière concentrique, est superposée au capteur d'efforts 310. Une vis d'assemblage 340 permet d'assembler l'entretoise de calage 320 et le capteur d'efforts 310. L'adaptateur de rigidité 330, sur lequel repose le capteur inductif 350, est placé dans un logement de l'entretoise de calage 320.

Préférentiellement, le capteur d'efforts 310, l'entretoise de calage 320 et le capteur inductif 350 sont de formes substantiellement cylindriques. L'adaptateur de rigidité 330 a alors avantageusement une forme de rondelle élastique conique (de rigidité calibrée).

Le boîtier 360 recouvre l'ensemble formé par le capteur d'efforts 310, l'entretoise de calage 320, l'adaptateur de rigidité 330 et le capteur inductif 350, et est maintenu solidaire de la table croisée 230 par un ensemble de vis d'assemblage 370. Le boîtier 360 présente une ouverture sur une face supérieure, de sorte à laisser émerger en partie le capteur inductif 350 afin que ledit capteur inductif 350 puisse jouer son rôle de détecteur de présence de charge.

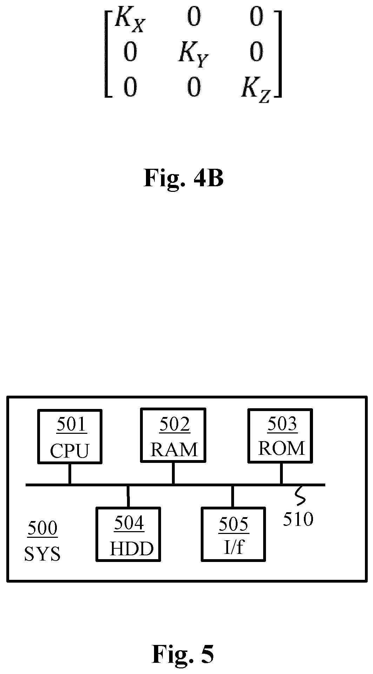

De manière à assurer l'adéquation des positionneurs 200 par rapport aux charges de fuselage et de voilure, des simulations numériques sont réalisées, grâce à un système informatique (tel que par exemple présenté ci-après en relation avec la Fig. 5).

Dans le cadre de ces simulations numériques, chaque positionneur 200 est modélisé par un ensemble de trois ressorts équivalents, tel que schématiquement illustré sur la Fig. 4A. Ces trois ressorts équivalents sont définis par un ensemble de trois vecteurs propres (« eigenvectors » en anglais) respectifs EVx, EVy, EVz associés à trois valeurs propres (« eigenvalues » en anglais) respectives $K_X$, $K_Y$, $K_Z$. Les valeurs propres respectives $K_X$, $K_Y$, $K_Z$ fournissent des valeurs de rigidité, exprimées en N.m$^{-1}$ ou une unité de mesure qui en est un multiple, typiquement en daN.mm$^{-1}$. Les vecteurs propres EVx, EVy, EVz fournissent des directions sur lesquelles sont appliquées les valeurs propres respectives $K_X$, $K_Y$, Kz. Les vecteurs propres EVx, EVy, EVz sont définis, dans un repère (X,Y,Z) commun (typiquement, un repère orthonormé direct), relativement à un point O représentatif d'un point d'interface entre le positionneur 200 et l'aéronef 100 en phase d'assemblage (i.e., point de contact avec le fuselage ou la voilure).

Les valeurs propres $K_X$, $K_Y$, $K_Z$, associées aux vecteurs propres EVx, EVy, EVz, peuvent être regroupées sur la diagonale d'une matrice 3 x 3 diagonale, dite matrice de rigidité :

$$\begin{bmatrix} K_X & 0 & 0 \\ 0 & K_Y & 0 \\ 0 & 0 & K_Z \end{bmatrix}$$

Comme montré aussi sur la **Fig. 4B.**

Ainsi, les simulations numériques sont grandement simplifiées par rapport à des simulations numériques réalisées à partir de modèles en éléments finis des positionneurs.

La Fig. 5 illustre schématiquement un exemple de plateforme matérielle, sous forme de circuiterie électronique, permettant d'implémenter un système informatique adapté pour réaliser des simulations numériques telles que décrites ici.

La plateforme matérielle comporte alors, reliés par un bus de communication 510 : un processeur ou CPU (« Central Processing Unit » en anglais) 501 ; une mémoire vive RAM (« Read Access Memory » en anglais) 502 ; une mémoire morte 503, par exemple de type ROM (« Read Only Memory » en anglais) ou EEPROM (« Electrically-Erasable Programmable ROM » en anglais) ou de type Flash ; une unité de stockage, telle qu'un disque dur HDD (« Hard Disk Drive » en anglais) 504, ou un lecteur de support de stockage, tel qu'un lecteur de cartes SD (« Secure Digital » en anglais) ; et un gestionnaire d'interfaces I/f 505.

Le gestionnaire d'interfaces I/f 505 permet à la plateforme matérielle d'interagir avec des périphériques, tels que des périphériques d'interface homme machine (saisie, affichage de résultats de simulation...), et/ou avec un réseau de communication.

Le processeur 501 est capable d'exécuter des instructions chargées dans la mémoire vive 502 à partir de la mémoire morte 503, d'une mémoire externe, d'un support de stockage (tel qu'une carte SD), ou d'un réseau de communication. Lorsque la plateforme matérielle est mise sous tension, le processeur 501 est capable de lire de la mémoire vive 502 des instructions et de les exécuter. Ces instructions forment un programme d'ordinateur causant l'implémentation, par le processeur 501, de tout ou partie des étapes et fonctionnements décrits ici en relation avec le système informatique.

Tout ou partie des étapes et fonctionnements décrits ici peut ainsi être implémenté sous forme logicielle par exécution d'un ensemble d'instructions par une machine programmable, par exemple un processeur de type DSP (« Digital Signal Processor » en anglais) ou un microcontrôleur, ou être implémenté sous forme matérielle par une machine ou un composant électronique (« chip » en anglais) dédié ou un ensemble de composants électroniques (« chipset » en anglais) dédié. D'une manière générale, le système informatique comporte de la circuiterie électronique adaptée et configurée pour implémenter les étapes et fonctionnements décrits ici en relation avec le système informatique.

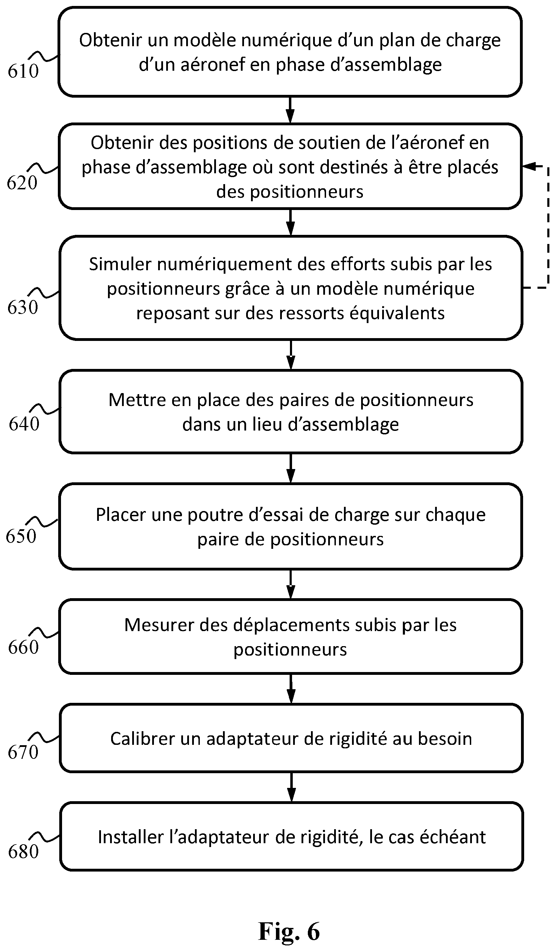

La **Fig. 6** illustre schématiquement un procédé de mise en place de positionneurs 200, par paires, dans une ligne d'assemblage.

Le procédé commence par une phase de simulation.

Dans une étape 610, le système informatique obtient un modèle numérique d'un plan de charge d'un aéronef en phase d'assemblage. Le plan de charge fournit un descriptif de répartition de charge pendant la phase d'assemblage considérée et définit donc les efforts attendus sur les positionneurs 200 (selon leurs positions respectives). Les paires de positionneurs 200 sont destinées à soutenir l'aéronef pendant la phase d'assemblage en question.

Dans une étape 620, le système informatique obtient des positions de soutien de l'aéronef en phase d'assemblage où sont destinés à être placés les positionneurs 200 (i.e., identifications des points d'interface). Ainsi, en fonction du plan de charge, les efforts théoriquement appliqués sur les positionneurs 200 sont connus.

Dans une étape 630, le système informatique réalise une simulation numérique des efforts subis par les positionneurs 200 selon le plan de charge. La simulation numérique est réalisée grâce à un modèle numérique de chaque positionneur 200 par ressorts équivalents, tel que décrit ci-dessus (les trois vecteurs propres EVx, EVy, EVz associés à leurs trois valeurs propres respectives $K_X$, $K_Y$, $K_Z$). La simulation numérique permet de déterminer des déplacements subis par les positionneurs 200 qui sont attendus au vu du plan de charge.

Plusieurs itérations des étapes 620 et 630 peuvent être réalisées de sorte à évaluer des changements de position de soutien d'au moins une paire de positionneurs 200, ou des changements de type de positionneurs (avec donc des caractéristiques, notamment en matière de rigidité).

Dans un mode de réalisation, le modèle numérique du plan de charge de l'aéronef en phase d'assemblage est une modélisation par poutres du fuselage et de la voilure de l'aéronef en phase d'assemblage, la simulation numérique portant ainsi sur une modélisation de station d'assemblage où les poutres appliquent les efforts attendus sur les modèles numériques des positionneurs 200 (ressorts).

La phase de simulation achevée, des paires de positionneurs sont mises en place dans un lieu d'assemblage dans une étape 640. La mise en place par paire de positionneurs est conforme aux positions de soutien définies dans le cadre de la simulation réalisée à l'étape 630. Les degrés de liberté de chaque positionneur 200 permettent une telle mise en place en adéquation avec le cadre de la simulation.

Dans une étape 650, une poutre d'essai de charge est placée sur chaque paire de positionneurs. La poutre d'essai de charge est adaptée selon le plan de charge obtenu à l'étape 610 par rapport auxdites positions de soutien définies dans le cadre de la simulation. Les caractéristiques de charge de la poutre d'essai de charge sont ajustées grâce à des masses placées (par exemple avec des systèmes d'accroche) à différents endroits de la poutre d'essai de charge. Les essais de charge peuvent être réalisés successivement sur les paires de positionneurs, ou en parallèle.

Dans une étape 660, des mesures de déplacement subi par chaque positionneur 200 lors des essais de charge sont effectuées. Les déplacements mesurés sont plus particulièrement des déplacements verticaux. Ces mesures sont fournies au système informatique (par exemple, par saisie), qui les compare aux déplacements attendus d'après la phase de simulation. Si les mesures obtenues sont conformes, selon une marge prédéterminée, avec les déplacements attendus, alors les positionneurs 200 concernés ne justifient pas de l'ajout de l'adaptateur de rigidité 330 ; sinon, le procédé est poursuivi dans une étape 670.

Dans l'étape 670, le système informatique calibre un adaptateur de rigidité 330 pour chaque positionneur 200 concerné, de sorte à compenser, selon la marge prédéterminée, la différence entre les mesures obtenues à l'étape 660 et les déplacements attendus d'après la phase de simulation.

Par exemple, l'adaptateur de rigidité 330 est calibré de sorte à obtenir une rigidité finale $K_f$ telle que :

$$K_f = \left(K_p \times K_a\right)/\left(K_p + K_a\right)$$

où $K_p$ est la rigidité du positionneur 200 sans l'adaptateur de rigidité 330 et $K_a$ est la rigidité de l'adaptateur de rigidité 330.

Pour calibrer l'adaptateur de rigidité 330, des abaques peuvent aussi être utilisés.

Dans une étape 680, chaque adaptateur de rigidité 330 ainsi calibré est installé en position sur le positionneur 200 concerné.

Ainsi, des défauts de planéité du sol de la ligne d'assemblage et/ou des tolérances de fabrications des positionneurs 200 et/ou des imprécisions de simulation peuvent être compensés.

Ainsi, grâce à la simplicité de modélisation obtenue par les ressorts équivalents tels qu'exposés ci-dessus et la compensation éventuelle réalisée par l'adapteur de rigidité, une mise en place rapide et sûre (grâce aux confirmations apportées par les simulations) des positionneurs peut être réalisée en vue de l'assemblage de l'aéronef.

## Revendications

1. Procédé de mise en place de positionneurs (200) destinés à soutenir le fuselage et la voilure d'un aéronef (100) pendant des opérations d'assemblage de l'aéronef (100), le procédé comportant une phase de simulation pour réaliser une simulation d'efforts appliqués aux positionneurs (200) pendant les opérations d'assemblage de l'aéronef (100), les efforts étant définis dans un modèle numérique d'un plan de charge de l'aéronef en phase d'assemblage, la phase de simulation étant exécutée par un système informatique et réalisée (630) grâce au modèle numérique de plan de charge de l'aéronef en phase d'assemblage et à un modèle numérique de chaque positionneur (200) sous forme d'un ensemble de trois ressorts équivalents définis par trois vecteurs propres respectifs EVx, Evy, Evz associés à trois valeurs propres respectives $K_X$, $K_Y$, $K_Z$, où les valeurs propres $K_X$, $K_Y$, $K_Z$ fournissent des valeurs de rigidité et les vecteurs propres Evx, Evy, Evz fournissent des directions sur lesquelles sont appliquées les valeurs propres respectives $K_X$, $K_Y$, $K_Z$,
le procédé comportant en outre :

- mettre en place (640) les positionneurs par paires ;
- effectuer (650) des essais de charge en mettant en place sur chaque paire de positionneurs (200) une poutre d'essais de charge, selon le plan de charge de l'aéronef en phase d'assemblage ;
- effectuer des mesures de déplacement subi par chaque positionneur pendant les essais de charge ;
- calibrer (670), par le système informatique, un adapteur de rigidité (330), de sorte à compenser selon une marge prédéterminée, pour chaque positionneur (200) concerné, une différence entre les mesures et un déplacement attendu d'après la phase de simulation ; et
- installer (680) l'adapteur de rigidité (330) calibré sur chaque positionneur concerné.

2. Procédé selon la revendication 1, dans lequel le modèle numérique du plan de charge de l'aéronef en phase d'assemblage est une modélisation par poutres du fuselage et de la voilure de l'aéronef en phase d'assemblage, la simulation portant ainsi sur une modélisation de station d'assemblage où les poutres appliquent lesdits efforts sur les modèles numériques des positionneurs (200).

3. Procédé selon la revendication 1 ou 2, dans lequel les valeurs propres $K_X$, $K_Y$, $K_Z$ sont regroupées sur la diagonale d'une matrice 3 x 3 diagonale, dite matrice de rigidité.

4. Procédé selon l'une quelconque des revendications 1 à 3, dans lequel l'adapteur de rigidité (330) calibré est installé entre une entretoise de calage (320) superposée à un capteur d'efforts (310) et un capteur inductif (350) adapté à détecter une présence de charge.

5. Procédé selon la revendication 4, dans lequel l'entretoise de calage (320), le capteur d'efforts (310) et le capteur inductif (350) ayant des formes substantiellement cylindriques et étant montés de manière concentrique, l'adapteur de rigidité (330) a une forme de rondelle élastique conique.

## Patentansprüche

1. Verfahren zum Einrichten von Positionierern (200), die dazu bestimmt sind, den Rumpf und die Tragfläche eines Flugzeugs (100) während der Vorgänge zur Montage des Flugzeugs (100) zu stützen, wobei das Verfahren eine Simulationsphase umfasst, um eine Simulation von auf die Positionierer (200) während der Vorgänge zur Montage des Flugzeugs (100) ausgeübten Kräften auszuführen, wobei die Kräfte in einem numerischen Modell eines Belastungsplans des Flugzeugs in der Montagephase definiert werden, wobei die Simulationsphase mit einem Computersystem durchgeführt wird und ausgeführt wird (630) dank des numerischen Modells des Belastungsplans des Flugzeugs in der Montagephase und eines numerischen Modells jedes Positionierers (200) in Form eines Satzes von drei äquivalenten Federn, die durch drei jeweilige Eigenvektoren EVx, Evy, Evz definiert werden, die drei jeweiligen Eigenwerten $K_X$, $K_Y$, $K_Z$ zugeordnet sind, wobei die Eigenwerte $K_X$, $K_Y$, $K_Z$ Steifigkeitswerte angeben und die Eigenvektoren Evx, Evy, Evz Richtungen angeben, auf welche die jeweiligen Eigenwerte $K_X$, $K_Y$, $K_Z$ angewandt werden, wobei das Verfahren ferner umfasst:

- paarweises Einrichten (640) der Positionierer;
- Durchführen (650) von Belastungstests durch Einrichten eines Belastungstestbalkens auf jedem Paar von Positionierern (200) gemäß dem Belastungsplan des Flugzeugs in der Montagephase;
- Durchführen von Messungen einer Verlagerung, die jeder Positionierer während der Belastungstests erfährt;
- Kalibrieren (670), durch das Computersystem, eines Steifigkeitsadapters (330), so dass gemäß einer vorbestimmten Spanne für jeden betroffenen Positionierer (200) eine Differenz zwischen den Messungen und einer gemäß der Simulationsphase erwarteten Verlagerung ausgeglichen wird; und
- Anbringen (680) des kalibrierten Steifigkeitsadapters (330) an jedem betroffenen Positionierer.

**2.** Verfahren nach Anspruch 1, wobei das numerische Modell des Belastungsplans des Flugzeugs in der Montagephase eine Modellierung durch Balken des Rumpfes und der Tragfläche des Flugzeugs in der Montagephase ist, wobei sich die Simulation somit auf eine Montagestationsmodellierung bezieht, bei der die Balken die Kräfte auf die numerischen Modelle der Positionierer (200) ausüben.

**3.** Verfahren nach Anspruch 1 oder 2, wobei die Eigenwerte $K_X$, $K_Y$, $K_Z$ auf der Diagonalen einer 3 x 3-Diagonalmatrix, Steifigkeitsmatrix genannt, gruppiert werden.

**4.** Verfahren nach einem der Ansprüche 1 bis 3, wobei der kalibrierte Steifigkeitsadapter (330) zwischen einem Verkeilungsdistanzstück (320), das über einem Kraftsensor (310) liegt, und einem induktiven Sensor (350), der zum Detektieren des Vorliegens einer Last angepasst ist, eingebaut wird.

**5.** Verfahren nach Anspruch 4, wobei das Verkeilungsdistanzstück (320), der Kraftsensor (310) und der induktive Sensor (350) im Wesentlichen zylindrische Formen haben und konzentrisch montiert sind, wobei der Steifigkeitsadapter (330) die Form einer konischen Federscheibe hat.

## Claims

**1.** Method for installing positioners (200) intended to support the fuselage and the wing box of an aircraft (100) during operations of assembling the aircraft (100), the method comprising a simulation phase for simulating forces applied to the positioners (200) during the operations of assembling the aircraft (100), the forces being defined in a digital model of a load plan for the aircraft in the assembly phase, the simulation phase being executed by a computer system and carried out (630) using the digital model of the load plan of the aircraft in the assembly phase and a digital model of each positioner (200) in the form of a set of three equivalent springs defined by three respective eigenvectors EVx, Evy, Evz associated with three respective eigenvalues $K_X$, Ky, $K_Z$, wherein the eigenvalues $K_X$, Ky, $K_Z$ provide stiffness values and the eigenvectors Evx, Evy, Evz provide directions to which the respective eigenvalues $K_X$, $K_Y$, $K_Z$ are applied, the method furthermore including:

- installing (640) the positioners in pairs;
- performing (650) load tests by installing, on each pair of positioners (200), a load test beam according to the load plan of the aircraft in the assembly phase;
- measuring the displacement undergone by each positioner during the load tests;
- the computer system calibrating (670) a stiffness adapter (330) so as to compensate according to a predetermined margin, for each positioner (200) in question, a difference between the measurements and an expected displacement according to the simulation phase; and
- installing (680) the calibrated stiffness adapter (330) on each positioner in question.

**2.** Method according to Claim 1, wherein the digital model of the load plan of the aircraft in the assembly phase is a beam model of the fuselage and the wing box of the aircraft in the assembly phase, the simulation thus concerning a modelling of an assembly station in which the beams apply said forces to the digital models of the positioners (200).

**3.** Method according to Claim 1 or 2, wherein the eigenvalues $K_X$, $K_Y$, $K_Z$ are grouped together on the diagonal of a 3 x 3 diagonal matrix, referred to as the stiffness matrix.

**4.** Method according to any one of Claims 1 to 3, wherein the calibrated stiffness adapter (330) is installed between a setting spacer (320) placed on top of a load sensor (310) and an inductive sensor (350) designed to detect the presence of a load.

5. Method according to Claim 4, wherein, with the setting spacer (320), the load sensor (310) and the inductive sensor (350) having substantially cylindrical shapes and being mounted concentrically, the stiffness adapter (330) is in the form of a conical spring washer.

**Fig. 1**

**Fig. 2**

**Fig. 3**

**Fig. 4A**

$$\begin{bmatrix} K_X & 0 & 0 \\ 0 & K_Y & 0 \\ 0 & 0 & K_Z \end{bmatrix}$$

**Fig. 4B**

**Fig. 5**

610 — Obtenir un modèle numérique d'un plan de charge d'un aéronef en phase d'assemblage

620 — Obtenir des positions de soutien de l'aéronef en phase d'assemblage où sont destinés à être placés des positionneurs

630 — Simuler numériquement des efforts subis par les positionneurs grâce à un modèle numérique reposant sur des ressorts équivalents

640 — Mettre en place des paires de positionneurs dans un lieu d'assemblage

650 — Placer une poutre d'essai de charge sur chaque paire de positionneurs

660 — Mesurer des déplacements subis par les positionneurs

670 — Calibrer un adaptateur de rigidité au besoin

680 — Installer l'adaptateur de rigidité, le cas échéant

**Fig. 6**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- CN 113219894 A
- US 2018314787 A1

**Littérature non-brevet citée dans la description**

- Self-calibration method of NC positioner for posture adjustment. **CHU WENMIN et al.** THE INTERNATIONAL JOURNAL OF ADVANCED MANUFACTURING TECHNOLOGY. SPRINGER, 27 January 2022, vol. 119, 7669-7683
- Stiffness parameter configuration of cartesian positioner components. **GAI YU-CHUN et al.** JOURNAL OF ZHEJIANG UNIVERSITY (ENGINEERING SCIENCE). GAIKAN BIANJIBU, 01 January 2014, vol. 48, 1434-1441
- Control system designing for correcting wing-fuselage assembly deformation of a large aircraft. **QIANG FANG et al.** ASSEMBLY AUTOMATION. EMERALD GROUP PUBLISHING LTD, 01 January 2017, vol. 37, 22-33